# EUROPÄISCHE PATENTSCHRIFT

(11) **EP 0 904 618 B1**
(45) Veröffentlichungstag und Bekanntmachung des Hinweises auf die Patenterteilung: **30.07.2003**
(21) Anmeldenummer: 97954938.3
(22) Anmeldetag: 20.12.1997
(51) Int. Cl.: H02B 1/28

(54) **SCHALTVORRICHTUNG WIE SCHÜTZE SOWIE VERFAHREN ZUR BEREITSTELLUNG SOLCHER SCHALTVORRICHTUNG**
SWITCHING DEVICE SUCH AS A CONTACTOR AND METHOD FOR THE PREPARATION OF SAID SWITCHING DEVICE
DISPOSITIF DE COUPURE DE COURANT, TEL QU'UN CONTACTEUR-DISJONCTEUR, ET PROCEDE DE PREPARATION D'UN TEL DISPOSITIF

(30) Priorität: 20.12.1996 DE 29622180 U
(43) Veröffentlichungstag der Anmeldung: 31.03.1999
(73) Patentinhaber: Hansen & Reinders GmbH, 45811 Gelsenkirchen (DE)
(72) Erfinder: Rode, Kurt, 45139 Essen (DE)
(74) Vertreter: GROSSE BOCKHORNI SCHUMACHER
(86) Internationale Anmeldenummer: EP9707220
(87) Internationale Veröffentlichungsnummer: WO98028829

(56) Entgegenhaltungen:
- EP-A- 0 096 652
- EP-A- 0 482 414
- DE-A- 3 235 331
- DE-A- 3 619 289
- US-A- 4 796 159

## Beschreibung

Die Erfindung betrifft eine Schaltvorrichtung, wie ein Schütz, insbesondere für den Bergbau nach dem Oberbegriff des Anspruchs 1 sowie ein Verfahren zur Bereitstellung solcher Schaltvorrichtungen.

Schaltvorrichtungen und Schaltkästen werden zur gegebenenfalls explosionsgeschützten oder einer anderen Schutzart entsprechenden Unterbringung elektrischer Schalt- und Steuerelemente verwendet, die z. B. aus einem Leistungsteil, wie einem Schütz, und einem Steuerungsteil, wie elektronischen oder elektrischen Steuerelementen, bestehen.

Im Bergbau, insbesondere im Untertagebergbau, werden Maschinen und Antriebsvorrichtungen verwendet, die mit relativ großen elektrischen Leistungen versorgt werden müssen. Da insbesondere im Untertagebergbau wegen des Explosionsrisikos aufgrund austretender Grubengase hohe Sicherheitsanforderungen bestehen, müssen sämtliche Maschinen mit Schaltvorrichtungen abgesichert sein.

Aus der DE 43 32 814 C2 ist beispielsweise ein Schaltkasten bekannt, dessen gegebenenfalls mit Gas-Überdruck befüllbares Gehäuse mit einer öffen- und schließbaren Klappe ausgestattet ist, wobei die elektrischen/elektronischen Bauteile in Module zusammengefaßt auf Platinen befestigt an Führungen in verschiedenen Richtungen aus dem Schaltkasten herausnehmbar sind. Dazu ist der Schaltkasten in zwei vertikale Einbauebenen unterteilt, wobei die Leistungsteile, wie Schütze, bezogen auf die Klappe vorrangig im hinteren Bereich des Schaltkastens und die elektrischen/elektronischen Steuerteile vorrangig im vorderen Schaltkastenbereich angeordnet sind. Die Leitungen der Leistungsteile bzw. Steuermodule laufen jeweils als Kabelbaum in einem sogenannten Rangiertableau zusammen.

Dokument D1 offenbart ein Schaltgerät für die Verwendung im untertägigen Grubenbetrieb, welches aufgeteilt ist in einen im Schutzgehäuse untergebrachten Leistungsteil und in ein Steuergerät, wobei Steuergerät und Leistungsteil optisch durch einen Lichtstrahl miteinander gekoppelt sind. Durch den geringeren Verdrahtungsaufwand aufgrund der kompakten Bauweise des Leistungsteils und dem separaten Aufbau des Steuerteils, gekoppelt in unmittelbarer Nähe, ist ein geringerer Verdrahtungsaufwand erforderlich.

In Dokument 2 wird eine explosionsgeschützte modularer Gehäuseanordnung vorweggenommen, bei welcher die Gehäusemodule mittels eines Stecker-Aufnahmearrangements an den Spannungsversorgungsbus gekoppelt sind.

Ein Großteil der Untertage eingesetzten Schaltvorrichtungen ist vergleichsweise alt und muß daher in naher Zukunft aufgrund der bestehenden Sicherheitsrichtlinien ausgetauscht werden. Dazu wird von einigen Herstellern vorgeschlagen, die vorhandenen, alten Schaltvorrichtungen gegen vollständig neue Schaltvorrichtungen auszutauschen. Dieses Vorgehen ist für die betroffenen Bergbauunternehmen, die wirtschaftlich nur bei knapp kalkulierten Budgets weltweit konkurrieren können, existenzbedrohend, da die Kosten für eine neue Schaltvorrichtung DM 60.000,- und mehr betragen. Gleichzeitig müssen sämtliche Untertage eingesetzten Steuerelemente nach gesetzlich vorgeschriebenen Zeitintervallen überprüft und technisch überholt werden. Daher besteht bei der vorgenannten Vorgehensweise das Risiko, daß nach Ablauf des Zeitintervalls wiederum die vollständigen Anschaffungskosten fällig werden.

Interne Aufzeichnungen und Bestandsaufnahmen der Anmelderin haben gezeigt, daß in nahezu allen Fällen des Versagens vorbezeichneter Schaltvorrichtungen der Fehler in den Steuerelementen bzw. Steuerteilen aufgetreten ist, während die Leistungsteile, wie Schütze, auch jahrelang fehlerfrei arbeiten.

Aufgabe der Erfindung ist es nun, Schaltvorrichtungen so zu gestalten, daß eine Renovierung bzw. Inspektion der Schalt-vorrichtungen einfach und möglichst kostengünstig durchführbar ist.

Diese Aufgabe wird durch eine Schaltvorrichtung nach Anspruch 1 gelöst. Basierend auf dem internen Wissen, daß die Leistungsteile selbst nahezu wartungsfrei sind, besteht die Erfindung in ihrem allgemeinsten Gedanken darin, daß ein zweiteiliges Gehäuse für die Schaltvorrichtung verwendet wird, wobei in dem einen Gehäuse der Leistungsteil, in dem anderen Gehäuse sämtliche Komponenten, die die üblichen Schutzfunktionen bewirken können, als ein Block untergebracht sind. Die beiden Gehäuseeinheiten sind über eine Adapterplatte bzw. einen Adapterrahmen aneinander montierbar, wobei der elektrische Anschluß über eine Steckverbindergruppe bewirkt wird.

Ein derartiger Aufbau der Schaltvorrichtungen hat zur Folge, daß der konventionelle Aufbau mit Steuerplatte, Verbindungsbaum und Rangiertableau entfallen kann. Aufgrund der Steckverbindergruppen (Steckerteil, Steckerbuchse) ist die Verdrahtung erheblich vereinfacht und wesentlich rationeller herzustellen.

Durch die erfindungsgemäße Ausgestaltung kann als weiterer, besonderer Vorteil zum Tragen kommen, daß die Leistungsteile nahezu aller bisher Untertage verwendeter Schaltvorrichtungen, Schaltkästen und Schütze weiter verwendet werden können. Da die Gehäuseabmessungen der Untertage verwendeten Schaltvorrichtungen trotz der verschiedenen Hersteller relativ gleich sind, muß die Adapterplatte nur "leistungsteilgehäuseseitig" an die vorhandene Schaltvorrichtung angepaßt werden, während "steuerteilseitig" bei allen erfindungsgemäßen Schaltvorrichtungen die gleiche Gehäuseeinheit verwendet werden kann.

Ein Verfahren zur Bereitstellung erfindungsgemäßer Schaltvorrichtungen ist in Anspruch 10 wiedergegeben.

Aus dem Vorhergesagten ist ersichtlich, daß für den ersten Umbau die komplette Schaltvorrichtung einmalig umgebaut werden muß, um das Leistungsteil und das Steuerteil in unterschiedlichen Gehäuseeinheiten anordnen zu können. Da zumindest ein Teil der verwendeten Bauteile in den Schaltvorrichtungen wieder verwendet wird und für zukünftige Instandhaltungs- und Renovierungsarbeiten keine Verdrahtungsarbeiten am Steuerteil mehr anfallen, amortisiert sich diese Vorgehensweise bereits nach den ersten Instandsetzungsarbeiten. Zur Kostenminderung trägt weiter bei, daß wesentlich weniger Ersatzteile auf Lager gehalten werden müssen, da bei sämtlichen Schaltvorrichtungen das gleiche Austauschteil (zweite Gehäuseeinheit) verwendbar ist.

Es liegt im Rahmen der Erfindung, auch neu zu installierende Schaltvorrichtungen mit dem erfindungsgemäßen Aufbau auszustatten. Auch können sämtliche aufeinander abgestimmte Bauteile wie Steckerbuchse/Steckerteil oder Adapterrahmen/platte an der jeweils anderen Gehäuseeinheit angeordnet sein.

Die erfindungsgemäß zu verwendenen Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen und der nachfolgenden Beschreibung unter Bezugnahme auf die Zeichnung, in der bevorzugte Ausführungsformen der Erfindung dargestellt sind. In der Zeichnung zeigen:
- Fig. 1: perspektivisch die beiden Gehäuseeinheiten der Schaltvorrichtung in auseinandergebautem Zustand;
- Fig. 2a: schematisch einen Schnitt durch einen Schaltkasten mit mehreren Schaltvorrichtungen;
- Fig. 2b: den Schaltkasten aus Fig. 2a in Seitenansicht;
- Fig. 3a: einen Adapterrahmen; und
- Fig. 3b: eine Adapterplatte.

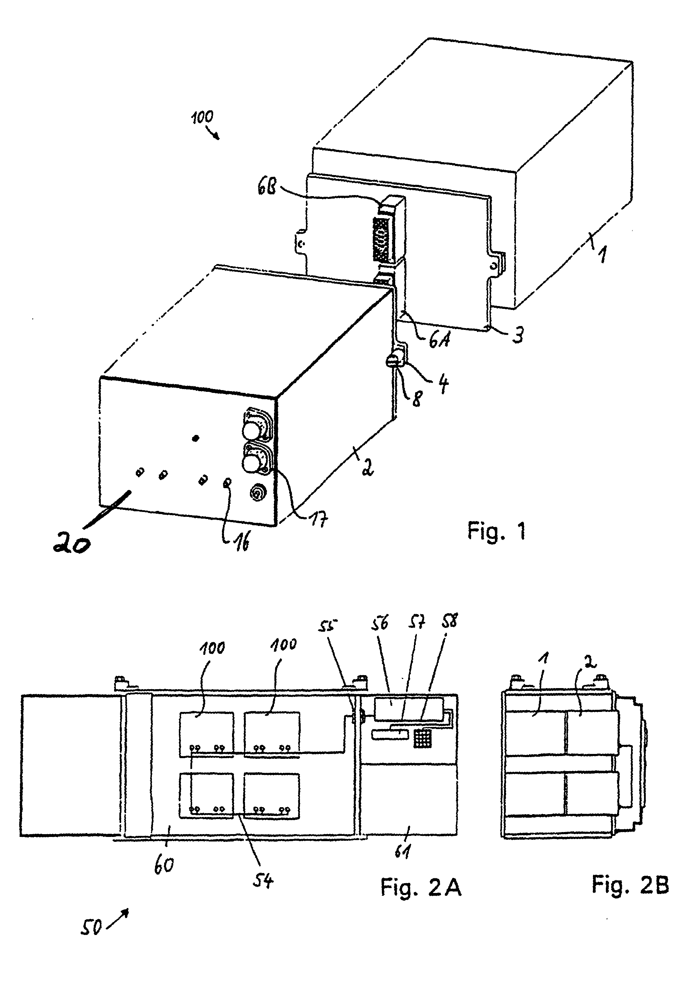

In der Fig. 1 ist eine insgesamt mit 100 bezeichnete Schaltvorrichtung zu sehen, bei der die erste Gehäuseeinheit 1 und die zweite Gehäuseeinheit 2 noch nicht aufeinander montiert wurden. In der ersten Gehäuseeinheit 1 ist der Leistungsteil, beispielsweise ein Schütz, untergebracht. In der zweiten Gehäuseeinheit 2 sind die Steuereinheiten, die Überwachungseinrichtungen, der Steuertrafo und sonstige die im Bergbau üblichen Schutzfunktionen übernehmenden Komponenten untergebracht. Da das Erfindungswesentliche in der Aufteilung der Komponenten und nicht in der Ausgestaltung der Komponenten besteht, ist hier weder eine abschließende Aufzählung gegeben noch sind der Leistungsteil oder die weiteren insgesamt mit Steuereinheit bezeichneten elektrischen/elektronischen Bauteile dargestellt worden.

Die Abmessungen der ersten Gehäuseeinheit ergeben sich in der Regel aus den Abmessungen des vor dem Umrüsten, d.h. dem Ausbau der gesamten Steuereinheit aus dem Schütz, vorliegenden Abmessungen. Das Gewicht des Leistungsteils ist im Vergleich zu dem Gewicht der Steuereinheit und damit dem Gewicht der Gehäuseeinheit 2, welches beispielsweise ca. 10 kg beträgt, wesentlich höher. Bei einer Inspektion der Schaltvorrichtung bzw. einem Austausch der defektanfälligeren damit ein geringeres Gewicht durch die teilweise sehr langen Schachtgänge getragen zu werden.

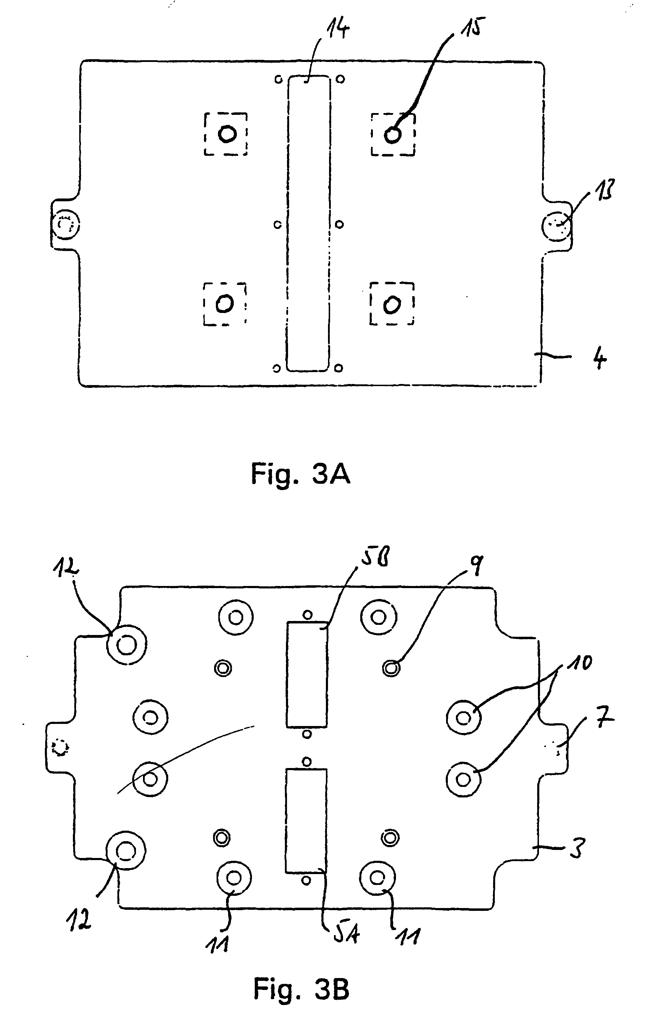

Die Montage der zweiten Gehäuseeinheit auf die erste Gehäuseeinheit wird über die Adapterplatte 3 bzw. den Adapterrahmen 4 ermöglicht. Die Gehäuseeinheit 2 und der Adapterrahmen 4 sind bevorzugt für alle Ausführungsformen gleich gestaltet. Ein Ausführungsbeispiel für Adapterplatte und Adapterrahmen ist in den Fign. 3a und 3b gegeben. Die in der Fig. 3b gezeigte Adapterplatte 3 besteht aus einer Metall- oder Kunststoffplatte, in die zwei rechteckige Aussparungen 5a, 5b zur Aufnahme zweier Steckerteile (6a, 6b in Fig. 1) ausgebildet sind. Weiterhin sind an der Adapterplatte Gewindebohrungen 7 angebracht, in die Befestigungsschrauben (8 in Fig. 1) zur Befestigung der zweiten Gehäuseeinheit 2 einschraubbar sind, Führungsstifte 9 und Befestigungslöcherpaare 10, 11 bzw. 12 angebracht. Das Vorsehen mehrerer Paare von Befestigungslöchern 10, 11, 12 ermöglicht, daß die gleiche Adapterplatte 3 auf die Schütze verschiedener Hersteller montiert werden kann. Zur Befestigung dienen die nicht gezeigten, im ursprünglichen Schütz bzw. der Gehäuseeinheit 1 vorhandenen und neu verwendeten Abstandshalter. Die Adapterplatte wird durch die Befestigungslöcher 10, 11, 12 mit Senkschrauben befestigt. Der in der Fig. 3a gezeigte Adapterrahmen paßt von seinen Abmessungen her abdichtend auf die Adapterplatte. Im Adapterrahmen sind Durchgangsbohrungen 13 für den Durchgriff der Befestigungsschrauben, eine Aussparung 14, in der die Steckerbuchse angeordnet ist und in die die Steckerteile 6a, 6b bei der Montage eingeführt werden, sowie mit den Führungsstiften 9 zusammenpassende Führungsbohrungen 15 vorgesehen.

Die Führungsstifte 9 und Führungsbohrungen 15 dienen dazu, nur ein paßgenaues Aufsetzen der zweiten auf die erste Gehäuseeinheit zuzulassen. Da es Untertage meist dunkel ist, die Gehäuseeinheit 2 nicht leicht zu heben ist und trotz des begrenzt zur Verfügung stehenden "Hantierraumes" eine Beschädigung der Gehäuseeinheiten verhindert werden soll, unterstützen die Führungsmittel 9, 15 ein erleichtertes Montieren.

Die Datenübertragung in die Gehäuseeinheit 2 hinein kann über Lichtwellenleiter erfolgen, die durch die Eintrittsöffnungen 16 in Fig. 1 in die Gehäuseeinheit 2 eintreten können. Weiterhin können auch Überwachungseinrichtungen und Einstellknöpfe 17 optional an der Gehäuseeinheit 2, insbesondere an seiner Frontplatte 20, vorgesehen sein.

In den Fig. 2a und 2b ist eine Anwendung der Schaltvorrichtung in einem Schaltkasten 50 mit mehreren unabhängig voneinander wirkenden Schaltvorrichtungen 100 gezeigt. Die einzelnen Schaltvorrichtungen 100 sind mittels eines Lichtwellenleiters bzw. Lichtwellenleiterbündels 54 mit einer Rechnereinheit 56 verbunden. Die Schaltkasteneinheit 60 und die Rechnerkasteneinheit 61 sind räumlich voneinander getrennt. Die Zuführung des Lichtwellenleiters/Lichtwellenleiterbündels 54 erfolgt durch eine Lichtwellenleiterdurchführung 55. Zur unabhängigen Steuerung der Schaltvorrichtungen 100 weist der Rechner eine Display-Anzeige 57 samt Tastatur 58 auf.

### Bezugszeichenliste

- 1: erste Gehäuseeinheit
- 2: zweite Gehäuseeinheit
- 3: Adapterplatte
- 4: Adapterrahmen
- 5a, b: Aussparung
- 6a, b: Steckteil
- 7 8: Befestigungsschraube
- 9: Führungsstifte
- 10: Befestigungslöcher
- 11: Befestigungslöcher
- 12: Befestigungslöcher
- 13: Durchgangsbohrungen
- 14 15: Führungsbohrung
- 16: Eintrittsöffnungen
- 17: Einstellknöpfe

- 20: Frontplatte

- 50: Schaltkasten

- 54: Lichtwellenleiter/-bündel
- 55: Lichtwellenleiterdurchführung
- 56: Rechnereinheit
- 57: Display-Anzeige
- 58: Tastatur

- 60: Schaltkasteneinheit
- 61: Rechnerkasteneinheit

- 100: Schaltvorrichtung

## Patentansprüche

1. Schaltvorrichtung, insbesondere für den Bergbau, mit zumindest einem Gehäuse, einem elektrischen Leistungsteil, wie ein Schütz, einer elektrischen/elektronischen Steuerungseinheit und zugehörigen elektrischen Leitun**gen,**
das Gehäuse wenigstens zwei, nämlich eine erste (1) und eine zweite (2) Gehäuseeinheit aufweist;
in der ersten Gehäuseeinheit (1) der Leistungsteil untergebracht ist;
die Steuereinheit in der zweiten Gehäuseeinheit (2) untergebracht ist;
**dadurch gekennzeichnet, daß**
die elektrischen Anschlußleitungen zum Betrieb des Leistungsteils in wenigstens einem mehrpoligen Steckerteil (6a, 6b) zusammengefaßt sind;
die elektrischen Anschlußleitungen zum Betreiben des Leistungsteils entsprechend in wenigstens einer mehrpoligen Steckerbuchse zusammgefaßt sind; und
die erste Gehäuseeinheit (1) eine mit dem Steckerteil versehene Adapterplatte (3) und die zweite Gehäuseeinheit (2) einen mit der Steckerbuchse versehenen Adapterrahmen (4) aufweist,
wobei die zweite Gehäuseeinheit (2) mit dem Adapterrahmen (4) auf die erste Gehäuseeinheit (1) mit der Adapterplatte (3) unter elektrischem Anschluß des Steckerteils (6a, 6b) an die Steckerbuchse montierbar ist.

2. Schaltvorrichtung nach Anspruch 1, **dadurch gekennzeichnet, daß** die Gehäuseeinheiten (1, 2) in montiertem Zustand ein schlagwetterfestes Gehäuse bilden.

3. Schaltvorrichtung nach Anspruch 1 oder 2, **dadurch gekennzeichnet, daß** in der zweiten Gehäuseeinheit (2) weitere elektrische/elektronische Bauteile, wie Überwachungseinrichtungen und/oder im Bergbau übliche Schutzfunktionskomponenten, angeordnet sind.

4. Schaltvorrichtung nach einem der Ansprüche 1 bis 3, **dadurch gekennzeichnet, daß** die Datenübertragung zu den Einrichtungen der zweiten Gehäuseeinheit von außen, bevorzugt mittels Lichtwellenleitern (54), erfolgt.

5. Schaltvorrichtung nach einem der Ansprüche 1 bis 4, **dadurch gekennzeichnet, daß** die Adapterplatte (3) und der Adapterrahmen (4) mechanische Führungsmittel aufweisen.

6. Schaltvorrichtung nach Anspruch 5, **dadurch gekennzeichnet, daß** die mechanischen Führungsmittel einerseits Führungsstifte (9), andererseits entsprechend ausgebildete Führungsbohrungen (15) sind.

7. Schaltvorrichtung nach einem der Ansprüche 1 bis 6, **dadurch gekennzeichnet, daß** die Adapterplatte (3) an verschiedene, im Bergbau verwendete Schütze anbringbar ist.

8. Schaltvorrichtung nach Anspruch 7, **dadurch gekennzeichnet, daß** die Adapterplatte (3) über die Plattenfläche verteilt angebrachte Befestigungslöcher (11, 12, 13) aufweist, die für das Befestigen der Adapterplatte (3) an den verschiedenen Schützen ausgelegt sind.

9. Schaltvorrichtung nach einem der Ansprüche 1 bis 8, **dadurch gekennzeichnet, daß** für einen Gleichspannungsschütz in dem zweiten Gehäuseteil (2) ein Gleichrichter mit entsprechender Varistorbeschaltung angeordnet ist.

10. Schaltkasten, **dadurch gekennzeichnet, daß** im Inneren des Schaltkastens (50) mehrere Schaltvorrichtungen (100) nach einem der Ansprüche 1 bis 8 angeordnet sind, wobei an dem Schaltkasten eine Rechnereinheit (61) angeordnet ist, die mit den einzelnen Schaltvorrichtungen (100) für eine Datenübertragung, insbesondere mittels Lichtwellenleitern (54), verbunden ist.

11. Verfahren zur Bereitstellung von Schaltvorrichtungen (100) nach einem der Ansprüche 1 bis 8, **gekennzeichnet durch** die Schritte:
- Umrüsten eines bestehenden Schütz derart, daß im wesentlichen nur das Leistungsteil samt zugehöriger Leitungen in dem ersten Gehäuseteil (1) angeordnet ist
- Anschließen der Leitungen an ein Steckerteil (6a, 6b)
- Montieren einer Adapterplatte (3) an die erste Gehäuseeinheit (1)
- Anordnen der Steuereinrichtungen und/oder der die üblichen Schutzfunktionen bewirkenden Komponenten in der zweiten Gehäuseeinheit (2), wobei die zweite Gehäuseeinheit (2) den Adapterrahmen (4) mit Steckerbuchse aufweist.

## Claims

1. Switching device, in particular, for use in mining, with at least one housing, one electrical power circuit, such as a contactor, one electrical/electronic control unit and associated electrical leads,
the housing provides at least two housing units, namely, a first housing unit (1) and a second housing unit (2);
the power circuit is housed in the first housing unit (1);
the control unit is housed in the second housing unit (2) ;
**characterised in that**
the electrical connecting leads for operating the power circuit are combined in at least one multiple-pole plug component (6a, 6b);
the electrical connecting leads for operating the power circuit are correspondingly combined in at least one multiple-pole socket; and
the first housing unit (1) provides an adapter plate (3) fitted with the plug component, and the second housing unit (2) provides an adapter frame (4) fitted with the socket,
wherein the second housing unit (2) with the adapter frame (4) can be mounted on the first housing unit (1) with the adapter plate (3) thereby electrically connecting the plug component (6a, 6b) to the socket.

2. Switching device according to claim 1, **characterised in that**, in the assembled condition, the housing units (1,2) form a firedamp-proof housing.

3. Switching device according to claim 1 or 2, **characterised in that** further electrical/electronic components, such as monitoring devices and/or components with a protective function conventional in mining, are arranged in the second housing unit (2).

4. Switching device according to any one of claims 1 to 3, **characterised in that** data transfer to the devices in the second housing unit is implemented from the outside, preferably by means of fibre-optic cables (54).

5. Switching device according to any one of claims 1 to 4, **characterised in that** the adapter plate (3) and the adapter frame (4) provide mechanical guiding means.

6. Switching device according to claim 5, **characterised in that** the mechanical guiding means on the one side are designed as guiding pins (9), and on the other side as corresponding guiding bore holes (15).

7. Switching device according to any one of claims 1 to 6, **characterised in that** the adapter plate (3) can be attached to various contactors used in mining.

8. Switching device according to claim 7, **characterised in that** the adapter plate (3) provides fastening bore holes (11, 12, 13) distributed over the plate surface, which are designed for attaching the adapter plate (3) to the various contactors.

9. Switching device according to any one of claims 1 to 8, **characterised in that** a rectifier with corresponding varistor circuit is arranged in the second housing unit (2) for a direct-voltage contactor.

10. Control box, **characterised in that** several switching devices (100) according to any one of claims 1 to 8 are arranged in the interior of the control box (50), wherein a computer unit (61), which is connected, especially by means of fibre optic conductors (54), to the individual switching devices (100) for data transfer, is arranged on the control box.

11. Method for the provision of switching devices (100) according to any one of claims 1 to 8, **characterised by** the stages:
- Modification of an existing contactor in such a manner that essentially only the power circuit including the associated leads is arranged in the first housing unit (1)
- Connection of the leads to a plug component (6a, 6b)
- Fitting an adapter plate (3) to the first housing unit (1)
- Arranging the control devices and/or the components providing conventional protective functions in the second housing unit (2), wherein the second housing unit (2) provides the adapter frame (4) with the socket.

## Revendications

1. Dispositif de commutation, notamment pour l'exploitation des mines, avec au moins un boîtier, une partie de puissance électrique, telle qu'un contacteur, une unité de commande électrique/électronique et les lignes électriques associées, le boîtier présente au moins deux unités de boîtier, à savoir une première (1) et une seconde (2) ; dans la première unité de boîtier (1) est disposée la partie de puissance ; l'unité de commande est disposée dans la seconde unité de boîtier (2) ; **caractérisé en ce que** les lignes de connexion électriques, pour le fonctionnement de la partie de puissance, sont réunies dans au moins une partie de fiche multipolaire (6a, 6b) ;
les lignes de connexion électriques, pour le fonctionnement de la partie de puissance, sont réunies d'une manière correspondante dans au moins une douille multipolaire ; et
la première unité de boîtier (1) présente une plaque d'adaptateur (3) pourvue de la partie de fiche et la seconde unité de boîtier (2) présente un cadre d'adaptateur (4) pourvu de la douille, où la seconde unité de boîtier (2) peut être montée avec le cadre d'adaptateur (4) sur la première unité de boîtier (1) avec la plaque d'adaptateur (3) sous un raccordement électrique de la partie de fiche (6a, 6b) à la douille.

2. Dispositif de commutation selon la revendication 1, **caractérisé en ce que** les unités de boîtier (1, 2), à l'état monté, forment un boîtier résistant à l'air grisouteux.

3. Dispositif de commutation selon la revendication 1 ou 2, **caractérisé en ce que** sont disposés dans la seconde unité de boîtier (2) d'autres composants électriques/électroniques, comme des installations de surveillance et/ou des composants ayant une fonction de protection usuels dans l'exploitation des mines.

4. Dispositif de commutation selon l'une des revendications 1 à 3, **caractérisé en ce que** la transmission des données aux installations de la seconde unité de boîtier a lieu de l'extérieur, de préférence par des guides d'onde de lumière (54).

5. Dispositif de commutation selon l'une des revendications 1 à 4, **caractérisé en ce que** la plaque d'adaptateur (3) et le cadre d'adaptateur (4) présentent des moyens de guidage mécaniques.

6. Dispositif de commutation selon la revendication 5, **caractérisé en ce que** les moyens de guidage mécaniques sont, d'une part, des chevilles de guidage (9), d'autre part des perçages de guidage (15) réalisés d'une manière correspondante.

7. Dispositif de commutation selon l'une des revendications 1 à 6, **caractérisé en ce que** la plaque d'adaptateur (3) peut être appliquée à différents contacteurs utilisés dans l'exploitation des mines.

8. Dispositif de commutation selon la revendication 7, **caractérisé en ce que** la plaque d'adaptateur (3) présente des trous de fixation (11, 12, 13) répartis sur la surface de la plaque qui sont conçus pour fixer la plaque d'adaptateur (3) aux différents contacteurs.

9. Dispositif de commutation selon l'une des revendications 1 à 8, **caractérisé en ce qu'**il est disposé pour un contacteur à courant continu dans la seconde partie de boîtier (2) un redresseur avec un câblage de varistor correspondant.

10. Caisson d'interrupteur, **caractérisé en ce que** sont disposés dans l'intérieur du caisson d'interrupteur (50) plusieurs dispositifs de commutation (100) selon l'une des revendications 1 à 8, où est disposée au caisson d'interrupteur une unité de calcul (61) qui est reliée aux dispositifs de commutation individuels (100) en vue d'une transmission des données, notamment par des guides d'onde de lumière (54).

11. Procédé de mise à disposition de dispositifs de commutation (100) selon l'une des revendications 1 à 8, **caractérisé par** les étapes consistant à :
- transformer un contacteur existant de façon pour que, pour l'essentiel, seulement la partie de puissance avec les lignes associées soit disposée dans la première partie de boîtier (1),
- connecter les lignes à une partie de fiche (6a, 6b),
- monter une plaque d'adaptateur (3) sur la première unité de boîtier (1),
- disposer les installations de commande et/ou les composants réalisant les fonctions de protection usuelles dans la seconde unité de boîtier (2), où la seconde unité de boîtier (2) présente le cadre d'adaptateur (4) avec la douille.
